# EUROPEAN PATENT APPLICATION

(11) **EP 4 650 855 A1**
(43) Date of publication of application: **19.11.2025**
(21) Application number: 24749564.1
(22) Date of filing: 22.01.2024
(51) Int. Cl.: G02B 27/01, B60R 11/00

(54) **DISPLAY APPARATUS AND TRANSPORTATION MEANS**

(30) Priority: 01.02.2023 CN 202310122352
(71) Applicant: Shenzhen Yinwang Intelligent Technologies Co., Ltd., Shenzhen, Guangdong 518110 (CN)
(72) Inventor: XU, Zhigao, Shenzhen, Guangdong 518129 (CN); CHEN, Chen, Shenzhen, Guangdong 518129 (CN); HUANG, Jiawei, Shenzhen, Guangdong 518129 (CN)
(74) Representative: Maiwald GmbH
(86) International application number: PCT/CN2024/073514
(87) International publication number: WO 2024/160083

(57) **Abstract**

A display apparatus and a transportation means are disclosed, and pertain to the field of display technologies. The display apparatus includes a picture generation unit, an optical path folding unit, and an imaging unit. The picture generation unit is configured to emit image light. The optical path folding unit is configured to direct the image light from the picture generation unit to the imaging unit. The imaging unit is configured to form a virtual image based on the image light from the optical path folding unit. The optical path folding unit includes an optical path folding layer, inorganic glass, and an organic plate that are sequentially stacked along an emergent optical path of the imaging unit. The display apparatus has high safety performance in a collision scenario.

## Description

This application claims priority to Chinese Patent Application No. 202310122352.3, filed with the China National Intellectual Property Administration on February 1, 2023 and entitled "DISPLAY APPARATUS AND TRANSPORTATION MEANS", which is incorporated herein by reference in its entirety.

### TECHNICAL FIELD

This application relates to the field of display technologies, and in particular, to a display apparatus and a transportation means.

### BACKGROUND

Display apparatuses are more widely used in daily life.

In a related technology, a display apparatus includes a picture generation unit, an optical path folding unit, and an imaging unit. The picture generation unit emits image light, the optical path folding unit is used to direct the image light to the imaging unit, and the imaging unit reflects the image light back to the optical path folding unit. The optical path folding unit usually includes an optical path folding layer and inorganic glass that are sequentially located on an emergent optical path of the imaging unit. The optical path folding layer is attached to the inorganic glass, and is used to transmit at least a part of the imaging light from the imaging unit to human eyes. In this way, a user can view a virtual image.

However, the inorganic glass is prone to breakage in a collision scenario, and consequently there is a safety risk.

### SUMMARY

This application provides a display apparatus and a transportation means, to improve safety performance of the display apparatus in a collision scenario.

According to one aspect, this application provides a display apparatus. The display apparatus includes a picture generation unit, an optical path folding unit, and an imaging unit. The picture generation unit is configured to emit image light. The optical path folding unit is configured to direct the image light from the picture generation unit to the imaging unit. The imaging unit is configured to form a virtual image based on the image light from the optical path folding unit. The optical path folding unit includes an optical path folding layer, inorganic glass, and an organic plate that are sequentially stacked along an emergent optical path of the imaging unit.

When the display apparatus is in a collision scenario, the organic plate disposed on an outer side of the inorganic glass can provide protection, to improve safety performance of the display apparatus in the collision scenario. The display apparatus is particularly applicable to a vehicle-mounted display scenario.

To further improve user experience, the optical path folding assembly may further include an anti-reflection layer, and the anti-reflection layer is configured to reduce reflection of ambient light on an outer surface of the display apparatus. The anti-reflection layer may include at least two polarization state conversion layers. The at least two polarization state conversion layers are used to control a polarization state of ambient light incident to the optical path folding unit, so that reflection of the ambient light can be reduced, and a display area of the display apparatus in a non-operating state is in a dark state, for example, black.

Because the organic plate has a delay effect on a phase of light, to avoid adverse impact of the organic plate on an effect of the anti-reflection layer, all polarization state conversion layers in the anti-reflection layer may be disposed between the inorganic glass and the organic plate.

Optionally, the anti-reflection layer may use any one of the following structures.

In a first structure, the anti-reflection layer includes a 1/4 wave plate, a first linear polarizer, and a second linear polarizer that are sequentially stacked along the emergent optical path of the imaging unit. A light transmission axis of the first linear polarizer and a light transmission axis of the second linear polarizer form an included angle. The included angle between the light transmission axis of the first linear polarizer and the light transmission axis of the second linear polarizer is controlled, so that an effect of weakening reflectivity of the anti-reflection layer on the ambient light can be controlled. Herein, a combination of the 1/4 wave plate and the first linear polarizer may be referred to as a circular polarizer.

In a second structure, the anti-reflection layer includes a 1/4 wave plate and a first linear polarizer that are sequentially stacked along the emergent optical path of the imaging unit.

Optionally, the optical path folding layer may use any one of the following structures: In a first structure, the optical path folding layer is a semi-transmissive semi-reflective film. In a second structure, the optical path folding layer includes a 1/4 wave plate and a reflective polarizer that are sequentially stacked along the emergent optical path of the imaging unit. In a third structure, the optical path folding layer includes a 1/4 wave plate, a reflective polarizer, and an absorptive polarizer that are sequentially stacked along the emergent optical path of the imaging unit, where a light transmission axis direction of the reflective polarizer is the same as a light transmission axis direction of the absorptive polarizer. In a fourth structure, the optical path folding layer includes a reflective polarizer, and the optical path folding unit further includes a 1/4 wave plate located on an optical path between the imaging unit and the optical path folding layer. In a fifth structure, the optical path folding layer includes a semi-transmissive semi-reflective film, a first 1/4 wave plate, and an absorptive polarizer that are sequentially stacked along the emergent optical path of the imaging unit, and the optical path folding unit further includes a second 1/4 wave plate located on an optical path between the imaging unit and the optical path folding layer. In a sixth structure, the optical path folding layer includes a semi-transmissive semi-reflective film and an absorptive polarizer that are sequentially stacked along the emergent optical path of the imaging unit, and the optical path folding unit further includes a 1/4 wave plate located on an optical path between the imaging unit and the optical path folding layer.

The optical path folding layer of each of the six structures can reflect at least a part of the image light from the picture generation unit to the imaging unit, and transmit at least a part of image light emitted by the imaging unit.

Optionally, the organic plate is of a single-layer structure or a multi-layer composite structure. When the organic plate is of a single-layer structure, the organic plate may be an acrylic plate, a polycarbonate plate, or a polyvinyl chloride plate. When the organic plate is of a multi-layer composite structure, the organic plate includes at least two different plates stacked together, and each layer may be an acrylic plate, a polycarbonate plate, or a polyvinyl chloride plate.

Optionally, light transmittance of the organic plate is 50% to 100%. Appropriate light transmittance of the organic plate is selected based on a requirement, so that reflectivity of a screen of the display apparatus on the ambient light can be controlled.

Optionally, the organic plate may be colorless, or may be colored, for example, dark brown or gray.

For example, a thickness of the organic plate is 1 mm to 2 mm, for example, 1.2 mm.

For example, a thickness of the inorganic glass is greater than or equal to 0.2 mm and less than 2 mm, for example, 0.5 mm to 1 mm. The thickness of the inorganic glass is small, which helps reduce a weight of the display apparatus.

Optionally, there is an optical adhesive layer between the optical path folding layer and the inorganic glass, or the optical path folding layer is directly formed on the inorganic glass.

Optionally, there is an optical adhesive layer between the inorganic glass and the organic plate. For example, when the anti-reflection layer is located between the inorganic glass and the organic plate, the organic plate is bonded to the anti-reflection layer by using an optical adhesive, or the inorganic glass is bonded to the anti-reflection layer by using an optical adhesive, therefore, so that there is the optical adhesive layer between the inorganic glass and the organic plate. For another example, when the optical path folding unit does not include the anti-reflection layer, the inorganic glass may be bonded to the organic plate by using the optical adhesive layer.

Optionally, light transmittance of the optical adhesive layer is 50% to 100%. Appropriate light transmittance of the optical adhesive layer is selected based on a requirement, so that reflectivity of a screen of the display apparatus on the ambient light can be controlled.

Optionally, the optical path folding unit further includes an optical film, the optical film is located on a side that is of the organic plate and that is away from the inorganic glass, and the optical film includes at least one of the following: an anti-reflectance (anti-reflectance, AR) film and an anti-glare film. The optical film can further reduce reflection of the ambient light on optical folding unit, thereby improving user experience.

In some examples, the picture generation unit includes a direct imaging image source or a projection imaging image source. For example, the direct imaging image source includes a liquid crystal display (liquid crystal display, LCD), an OLED display, a light-emitting diode (light-emitting diode, LED) display, or the like. The projection imaging image source includes an illumination light source and a reflective spatial light modulator. The illumination light source is configured to generate a light beam, and the reflective spatial light modulator is configured to: modulate and reflect the light beam generated by the light source, to obtain the image light. When the picture generation unit includes the projection imaging image source, the picture generation unit further includes a diffuser screen configured to: transmit the image light and form a real image. For example, the reflective spatial light modulator includes a liquid crystal on silicon (liquid crystal on silicon, LCoS) modulator or a micro-electro-mechanical system (micro-electro-mechanical system, MEMS) modulator.

Optionally, the picture generation unit may further include a polarization state conversion element, and the polarization state conversion element is configured to convert a polarization state of the image light generated by the image source into a target polarization state. In this way, an image source type may be randomly selected based on a requirement, and implementation is more convenient.

Optionally, the image light emitted by the picture generation unit is linearly polarized light, circularly polarized light, or elliptically polarized light.

In some examples, the imaging unit includes a curved reflection mirror.

In some examples, a light exit surface of the picture generation unit is opposite to the optical path folding unit. The image light emitted by the picture generation unit is reflected by the optical path folding unit to the imaging unit, then the imaging unit reflects the image light from the optical path folding unit to the optical path folding unit, and finally the image light is emitted from the optical path folding unit. A quantity of times of reflecting the image light inside the display apparatus is small, which helps improve light efficiency.

In some other examples, the light exit surface of the picture generation unit is opposite to the imaging unit. The image light emitted by the picture generation unit is reflected by the imaging unit to the optical path folding unit, then reflected by the optical path folding unit to the imaging unit, then reflected by the imaging unit to the optical path folding unit again, and then emitted from the optical path folding unit. In this example, image distortion is small in a display process, and picture quality of the virtual image is good.

Optionally, the display apparatus further includes a housing. The housing has an observation window. Both the picture generation unit and the imaging unit are located in the housing. The optical path folding unit is located at the observation window, and the organic plate is located on an outer side of the housing. The housing may protect the units, and the units are integrated together by using the housing, to facilitate overall movement of the display apparatus.

Optionally, the display apparatus further includes a host processor. The host processor is configured to send image data to the picture generation unit, and the picture generation unit is configured to provide the image light based on the received image data.

In some examples, the display apparatus further includes a power supply that supplies power to the host processor and the picture generation unit.

In some examples, the display apparatus may be a desktop display apparatus, for example, a display and a television.

According to another aspect, this application provides a display apparatus. A structure of the display apparatus is similar to the structure of the foregoing display apparatus, but the inorganic glass is replaced with another organic plate. The organic plate has good optical performance, and has a small delay effect on a phase of light.

According to still another aspect, this application provides a transportation means. The transportation means includes any one of the foregoing display apparatuses. The display apparatus is mounted on the transportation means. For example, the transportation means includes but is not limited to a vehicle, an airplane, a train, or a ship.

### BRIEF DESCRIPTION OF DRAWINGS

FIG. 1 is a diagram of a use state of a display apparatus according to an embodiment of this application;
FIG. 2 is a diagram of a use state of another display apparatus according to an embodiment of this application;
FIG. 3 is a diagram of a use state of still another display apparatus according to an embodiment of this application;
FIG. 4 is a diagram of a structure of a display apparatus according to an embodiment of this application;
FIG. 5 is a diagram of a structure of an optical path folding unit according to an embodiment of this application;
FIG. 6 is a diagram of a circuit of a display apparatus according to an embodiment of this application; and
FIG. 7 is a diagram of a function of a transportation means according to an embodiment of this application.

### DESCRIPTION OF EMBODIMENTS

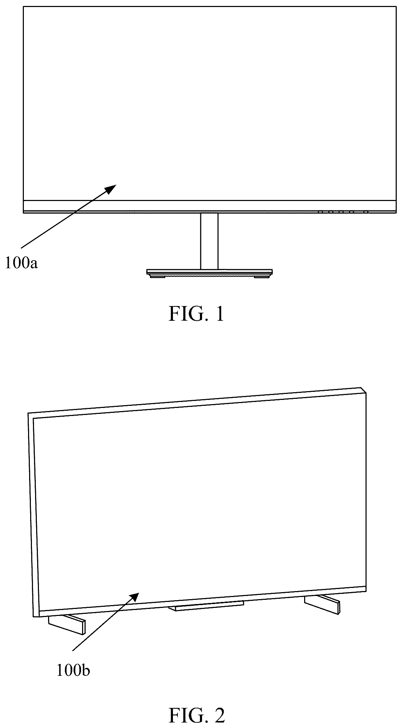

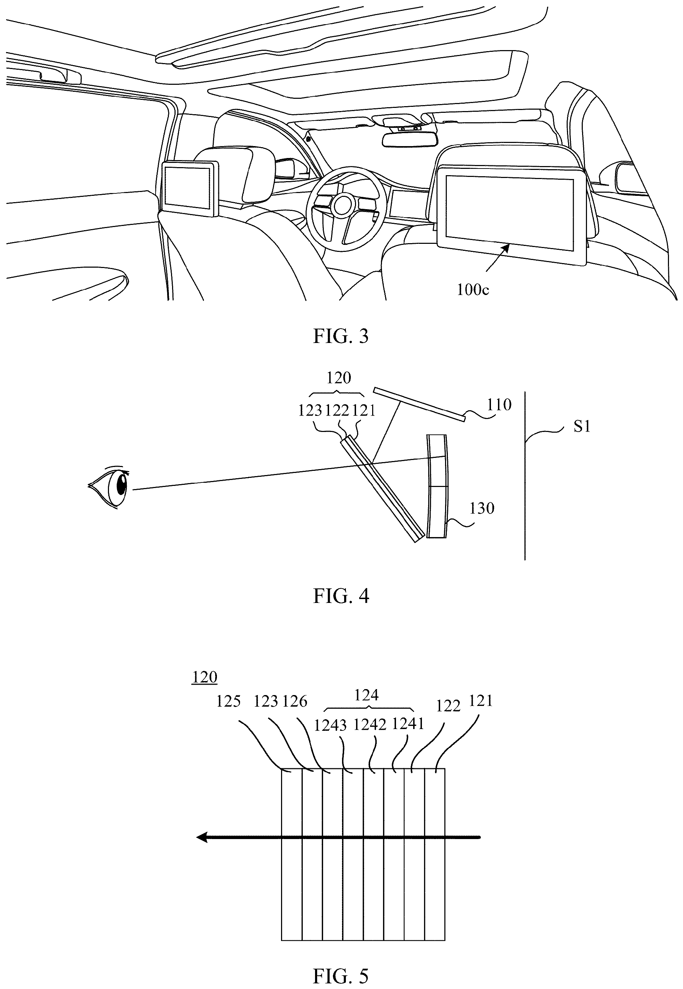

The following describes in detail a display apparatus provided in embodiments of this application with reference to the accompanying drawings. The display apparatus may be used as a common display (for example, 100a shown in FIG. 1) for office use, or may be used as a television (for example, 100b shown in FIG. 2) for home entertainment (as a television), or may be used for vehicle-mounted display (for example, 100c shown in FIG. 3, where the display apparatus is mounted on a seat of a vehicle, or is mounted on a dashboard of a vehicle), or may be made as a portable display apparatus, so that the display apparatus is more flexibly used in various scenarios. A physical size, a display size, and resolution of the display apparatus may be adjusted based on a use scenario. In this application, the display apparatus may also be referred to as a virtual image display system or a display system.

FIG. 4 is a diagram of a structure of a display apparatus according to an embodiment of this application. As shown in FIG. 4, the display apparatus includes a picture generation unit 110, an optical path folding unit 120, and an imaging unit 130. The picture generation unit 110 is configured to emit image light. The optical path folding unit 120 is configured to direct (for example, reflect) the image light from the picture generation unit 110 to the imaging unit 130. The imaging unit 130 is configured to form a virtual image S1 based on the image light from the optical path folding unit 120.

In this embodiment of this application, the image light is a light beam carrying image information. The image light emitted by the picture generation unit 110 is reflected by the optical path folding unit 120 and then arrives at the imaging unit 130. The imaging unit 130 reflects the image light to the optical path folding unit 120, and the optical path folding unit 120 transmits the imaging light to human eyes, so that a user can view a virtual image. Herein, the optical path folding unit 120 may change a propagation direction of the image light emitted by the picture generation unit 110, so that the propagation path of the image light is folded and the image light arrives at the imaging unit 130, thereby reducing a size of the display apparatus. In addition, a quantity of times of reflecting the image light inside the display apparatus is small, which helps improve light efficiency.

As shown in FIG. 4, the optical path folding unit 120 includes an optical path folding layer 121, inorganic glass 122, and an organic plate 123 that are sequentially stacked along an emergent optical path of the imaging unit 130. When the display apparatus is in a collision scenario, the organic plate disposed on an outer side of the inorganic glass can provide protection, to improve safety performance of the display apparatus in the collision scenario.

In this embodiment of this application, the optical path folding layer 121 may also be referred to as an optical splitting layer, and is configured to reflect at least a part of the image light from the imaging unit 110 to the imaging unit 130, and transmit at least a part of image light from the imaging unit 130.

The optical path folding layer 121 may use any one of the following six structures.

In a first structure, the optical path folding layer 121 is a semi-transmissive semi-reflective film. A ratio (which may be referred to as a split ratio) of transmittance to reflectivity of the semi-transmissive semi-reflective film may be set based on an actual requirement. For example, the ratio of the transmittance to the reflectivity is 7:3, 6:4, 5:5, 4:6, or 3:7. For example, the semi-transmissive semi-reflective film may be deposited on a surface of the inorganic glass 122.

A part of the image light (which may be circularly polarized light, or elliptically polarized light, or linearly polarized light, or non-polarized light) emitted by the picture generation unit 110 is reflected by the semi-transmissive semi-reflective film to the imaging unit 130, and the imaging unit 130 reflects the received image light to the semi-transmissive semi-reflective film. A part of the image light is emitted to human eyes through the semi-transmissive semi-reflective film, to form a virtual image.

In a second structure, the optical path folding layer 121 includes a reflective polarizer, and the reflective polarizer is located on an optical path of the image light emitted by the picture generation unit 110 and an optical path of the image light emitted by the imaging unit 130. The optical path folding unit 120 further includes a 1/4 wave plate located on an optical path between the imaging unit 130 and the optical path folding layer 121. For example, the reflective polarizer may be attached to a surface of the inorganic glass 122.

Linearly polarized light in a first polarization direction (S light) emitted by the picture generation unit 110 arrives at the reflective polarizer, the reflective polarizer reflects the linearly polarized light in the first polarization direction (S light) and transmits linearly polarized light in a second polarization direction (P light), the reflective polarizer reflects the linearly polarized light in the first polarization direction (S light) to the 1/4 wave plate, and the 1/4 wave plate converts the linearly polarized light in the first polarization direction (S light) into circularly polarized light or elliptically polarized light, and then emits the circularly polarized light or the elliptically polarized light to the imaging unit 130. The imaging unit 130 reflects the received circularly polarized light or elliptically polarized light, the circularly polarized light or the elliptically polarized light passes through the 1/4 wave plate and then is converted into the linearly polarized light in the second polarization direction (P light), and then the linearly polarized light in the second polarization direction (P light) is emitted to human eyes through the reflective polarizer, to form a virtual image.

Herein, an example in which the reflective polarizer is a polarizer that transmits the P light and reflects the S light is used for description. In another example, the reflective polarizer may alternatively be a polarizer that transmits the S light and reflects the P light.

In a third structure, the optical path folding layer 121 includes a 1/4 wave plate and a reflective polarizer. The 1/4 wave plate and the reflective polarizer are sequentially located on an optical path of the image light emitted by the picture generation unit 110 and sequentially located on an optical path of the image light emitted by the imaging unit 130. For example, the reflective polarizer may be attached to a surface of the inorganic glass 122. For example, the reflective polarizer and the 1/4 wave plate may be integrally made and then bonded to the surface of the inorganic glass 122, or the reflective polarizer and the 1/4 wave plate may be sequentially bonded to the surface of the inorganic glass 122 by using an adhesive layer. Herein, the adhesive layer may be an optical adhesive layer or a pressure-sensitive adhesive layer included in the polarizer.

The circularly polarized light or the elliptically polarized light emitted by the picture generation unit 110 arrives at the 1/4 wave plate, the 1/4 wave plate converts the circularly polarized light or the elliptically polarized light into linearly polarized light in the first polarization direction (S light), the reflective polarizer reflects the linearly polarized light in the first polarization direction (S light) that is from the 1/4 wave plate to the 1/4 wave plate again, and the 1/4 wave plate converts the linearly polarized light in the first polarization direction (S light) that is from the reflective polarizer into circularly polarized light or elliptically polarized light again, and then emits the circularly polarized light or the elliptically polarized light to the imaging unit 130. The imaging unit 130 reflects the received circularly polarized light or elliptically polarized light, the circularly polarized light or the elliptically polarized light passes through the 1/4 wave plate and then is converted into the linearly polarized light in the second polarization direction (P light), and then the linearly polarized light in the second polarization direction (P light) passes through the reflective polarizer and is emitted to human eyes, to form a virtual image.

Herein, an example in which the reflective polarizer is a polarizer that transmits the P light and reflects the S light is used for description. In another example, the reflective polarizer may alternatively be a polarizer that transmits the S light and reflects the P light.

In a fourth structure, the optical path folding layer 121 includes a 1/4 wave plate, a reflective polarizer, and an absorptive polarizer. The 1/4 wave plate, the reflective polarizer, and the absorptive polarizer are sequentially located on an optical path of the image light emitted by the picture generation unit 110, and are sequentially located on an optical path of the image light emitted by the imaging unit 130. A light transmission axis direction of the reflective polarizer is the same as a light transmission axis direction of the absorptive polarizer. For example, the absorptive polarizer, the reflective polarizer, and the 1/4 wave plate may be integrally made and then bonded to the surface of the inorganic glass 122, or the absorptive polarizer, the reflective polarizer, and the 1/4 wave plate may be sequentially bonded to the surface of the inorganic glass 122 by using an adhesive layer. Herein, the adhesive layer may be an optical adhesive layer or a pressure-sensitive adhesive layer included in the polarizer.

The circularly polarized light or the elliptically polarized light emitted by the picture generation unit 110 is converted into linearly polarized light in the first polarization direction by using the 1/4 wave plate, the reflective polarizer reflects, to the 1/4 wave plate again, a large part of the linearly polarized light in the first polarization direction that is from the 1/4 wave plate, and the 1/4 wave plate converts the linearly polarized light in the first polarization direction that is from the reflective polarizer into circularly polarized light or elliptically polarized light again, and then emits the circularly polarized light or the elliptically polarized light to the imaging unit 130. The absorptive polarizer is configured to absorb the linearly polarized light in the first polarization direction that passes through the reflective polarizer. The imaging unit 130 reflects the received circularly polarized light or elliptically polarized light, the circularly polarized light or the elliptically polarized light passes through the 1/4 wave plate and then is converted into the linearly polarized light in the second polarization direction, and then the linearly polarized light in the second polarization direction passes through the reflective polarizer and the absorptive polarizer in sequence and is emitted to human eyes, to form a virtual image. The absorptive polarizer is disposed, so that the image light emitted by the picture generation unit 110 is not directly incident to human eyes to form a real image. This avoids interference to the virtual image, and improves a viewing effect of the user.

It should be noted that, in embodiments of this application, the polarizer may also be referred to as a polarizing sheet. A polarization direction of the reflective polarizer is the same as that of the absorptive polarizer, and both are the second polarization direction. In this way, the reflective polarizer is configured to reflect the linearly polarized light in the first polarization direction and transmit the linearly polarized light in the second polarization direction, and the absorptive polarizer is configured to absorb the linearly polarized light in the first polarization direction and transmit the linearly polarized light in the second polarization direction. The first polarization direction is perpendicular to the second polarization direction. For example, the linearly polarized light in the first polarization direction is S light, and the linearly polarized light in the second polarization direction is P light. Alternatively, the linearly polarized light in the first polarization direction is P light, and the linearly polarized light in the second polarization direction is S light.

In a fifth structure, the optical path folding layer 121 includes a semi-transmissive semi-reflective film, a first 1/4 wave plate, and an absorptive polarizer. The semi-transmissive semi-reflective film, the first 1/4 wave plate, and the absorptive polarizer are sequentially located on an optical path of the image light emitted by the picture generation unit 110, and are sequentially located on an optical path of the image light emitted by the imaging unit 130. In this case, the optical path folding unit 120 further includes a second 1/4 wave plate located on an optical path between the imaging unit 130 and the optical path folding layer 121.

For example, the absorptive polarizer, the 1/4 wave plate, and the semi-transmissive semi-reflective film may be integrally made and then bonded to the surface of the inorganic glass 122, or the absorptive polarizer and the 1/4 wave plate with the semi-transmissive semi-reflective film formed on its surface may be sequentially bonded to the surface of the inorganic glass 122 by using an adhesive layer. Herein, the adhesive layer may be an optical adhesive layer or a pressure-sensitive adhesive layer included in the polarizer.

A part of the circularly polarized light or the elliptically polarized light (left-handed light) emitted by the picture generation unit 110 passes through the semi-transmissive semi-reflective film and is emitted to the first 1/4 wave plate, and passes through the first 1/4 wave plate and then is converted into the linearly polarized light in the first polarization direction (S light), and then the linearly polarized light in the first polarization direction is emitted to the absorptive polarizer. The absorptive polarizer absorbs the linearly polarized light in the first polarization direction (S light). The absorptive polarizer is disposed, so that the image light emitted by the picture generation unit 110 is not directly incident to human eyes to form a real image. This avoids interference to the virtual image, and improves a viewing effect of the user.

Another part of the circularly polarized light or the elliptically polarized light (left-handed light) emitted by the picture generation unit 110 is reflected by the semi-transmissive semi-reflective film to the second 1/4 wave plate, and passes through the second 1/4 wave plate and then is converted into the linearly polarized light in the second polarization direction (S light), and the imaging unit 130 or the imaging unit 130 reflects the linearly polarized light in the second polarization direction (S light) to the second 1/4 wave plate again. The linearly polarized light in the second polarization direction (S light) passes through the second 1/4 wave plate and is converted into circularly polarized light or elliptically polarized light (right-handed light), and the circularly polarized light or the elliptically polarized light (right-handed light) is emitted to the semi-transmissive semi-reflective film. A part of the circularly polarized light or elliptically polarized light (right-handed light) passes through the semi-transmissive semi-reflective film and then is emitted to the first 1/4 wave plate, and passes through the first 1/4 wave plate and then is converted into the linearly polarized light in the second polarization direction (P light). The linearly polarized light in the second polarization direction (P light) passes through the absorptive polarizer and is emitted to human eyes, to form a virtual image.

In a sixth structure, the optical path folding layer 121 includes a semi-transmissive semi-reflective film and an absorptive polarizer. The semi-transmissive semi-reflective film and the absorptive polarizer are sequentially located on an optical path of the image light emitted by the picture generation unit 110, and are sequentially located on an optical path of the image light emitted by the imaging unit 130. In this case, the optical path folding unit 120 further includes a 1/4 wave plate located on an optical path between the imaging unit 130 and the optical path folding layer 121. For example, the semi-transmissive semi-reflective film and the absorptive polarizer may be integrally made and then bonded to the surface of the inorganic glass 122.

After passing through the semi-transmissive semi-reflective film, a part of the linearly polarized light in the first polarization direction (S light) that is emitted by the picture generation unit 110 is absorbed by the absorptive polarizer. The absorptive polarizer is disposed, so that the image light emitted by the picture generation unit 110 is not directly incident to human eyes to form a real image. This avoids interference to the virtual image, and improves a viewing effect of the user.

Another part of the linearly polarized light in the first polarization direction (S light) that is emitted by the picture generation unit 110 is reflected by the semi-transmissive semi-reflective film to the 1/4 wave plate, and the 1/4 wave plate converts the received linearly polarized light in the first polarization direction (S light) into circularly polarized light or elliptically polarized light, and then the circularly polarized light or the elliptically polarized light is emitted to the imaging unit 130. The imaging unit 130 reflects the received circularly polarized light or elliptically polarized light to the 1/4 wave plate again, and the circularly polarized light or the elliptically polarized light passes through the 1/4 wave plate and is converted into the linearly polarized light in the second polarization direction (P light). A part of the linearly polarized light in the second polarization direction (P light) passes through the semi-transmissive semi-reflective film and the absorptive polarizer in sequence and is emitted to human eyes, to form a virtual image.

For example, a thickness of the inorganic glass 122 is greater than or equal to 0.2 mm and less than 2 mm. Optionally, a thickness of the inorganic glass 122 is 0.5 mm to 1 mm, for example, 0.55 mm. In a related technology, the thickness of the inorganic glass is greater than 2 mm, and a large thickness causes a large weight of the display apparatus. The thickness of the inorganic glass is reduced, so that a weight of the display apparatus can be reduced.

Optionally, the organic plate 123 may be of a single-layer structure or a multi-layer composite structure. Any layer in the organic plate 123 may use the following material: acrylic (namely, polymethyl methacrylate (polymethyl methacrylate, PMMA) (which is also referred to as plexiglass)), polycarbonate (polycarbonate, PC), polyvinyl chloride (polyvinyl chloride, PVC), polystyrene (Polystyrene, PS), and allyl diglycol carbonate (allyl diglycol carbonate, ADC, commonly referred to as CR-39). In some examples, the organic plate 123 is a composite plate including an acrylic plate and a PC plate.

For example, a thickness of the organic plate 123 is 1 mm to 2 mm.

Because a vehicle-mounted display scenario has a higher requirement for collision safety of the display apparatus, the display apparatus provided in embodiments of this application is particularly applicable to the vehicle-mounted display scenario. The thickness of the inorganic glass 122 and the thickness and a material of the organic plate 123 are selected, so that related regulation in a collision safety test can be complied with.

In embodiments of this application, light transmittance of the organic plate 123 may be set based on an actual requirement, for example, 50% to 100%, for example, 50%, 55%, 60%, 65%, 70%, 75%, 80%, 85%, 90%, 95%, or 100%. When the light transmittance of the organic plate 123 is low, intensity of ambient light that passes through the organic plate 123 and arrives at the optical path folding layer 121 is reduced, so that intensity of ambient light reflected by the optical path folding layer 121 is reduced accordingly. Therefore, reflection of the ambient light on the optical path folding unit can be reduced, and user experience can be improved.

In some examples, at least one layer in the organic plate 123 is doped with light-absorbing particles, and/or surface processing (for example, coarsening processing) is performed on the organic plate 123, so that the light transmittance of the organic plate 123 can be achieved. A type of the light-absorbing particles is not limited in embodiments of this application, provided that the light transmittance of the organic plate 123 can be reduced.

Optionally, the organic plate 123 may be colored, for example, gray, blue, or dark brown, or the organic plate 123 may be colorless.

Optionally, the organic plate 123 may be bonded to the inorganic glass 122 by using an optical adhesive layer.

The picture generation unit 110 may be a direct imaging image source, for example, an LCD, an organic light-emitting diode, an OLED display, or an LED display. Herein, the LED display may be a micro (micro) LED display, a mini (mini) LED display, or the like.

In some other examples, the picture generation unit 110 includes a projection imaging image source, and the projection imaging image source may be an optical engine (which is also referred to as a picture generation unit (picture generation unit, PGU)). The optical engine includes a light source and a reflective spatial light modulator. The light source is configured to generate a light beam, and the reflective spatial light modulator is configured to: modulate and reflect the light beam, to form image light. For example, the reflective spatial light modulator includes an LCoS modulator or an MEMS modulator. Optionally, in addition to the optical engine, the picture generation unit 110 further includes a diffuser screen (not shown in the figure). The diffuser screen is configured to: receive the light beam output by the optical engine, and diffuse the received light beam (for example, perform diffuse reflection on the received light beam), to improve imaging quality.

A structure of the picture generation unit 110 is not limited in this application, provided that the picture generation unit 110 can provide the foregoing image light.

Optionally, when the light beam provided by the picture generation unit 110 is two-dimensional image light, the virtual image viewed by the user is a two-dimensional image. Alternatively, when the light beam provided by the picture generation unit 110 is three-dimensional image light, the virtual image viewed by the user is a three-dimensional image.

In some examples, the image light emitted by the picture generation unit 110 may be linearly polarized light, circularly polarized light, or elliptically polarized light.

When a polarization state of the image light emitted by the image source in the picture generation unit 110 is different from a target polarization state required by the picture generation unit 110, the picture generation unit 110 may further include a polarization state conversion element, configured to convert the image light generated by the image source into the target polarization state. The polarization state conversion element includes but is not limited to a quarter-wave plate, a P polarizing sheet, an S polarizing sheet, or a combination thereof (for example, the 1/4 wave plate and the P polarizing sheet, or the 1/4 wave plate and the S polarizing sheet). For example, a quarter-wave plate is disposed on a surface of the LCD, so that image light emitted by the LCD can be converted into circularly polarized light or elliptically polarized light.

In some examples, the imaging unit 130 includes an opaque reflective imaging element, for example, a curved reflection mirror (for example, a curved reflection mirror made of metal). In some other examples, the imaging unit 130 includes a transparent reflective imaging element, for example, one lens, a lens group including a plurality of lenses, or a transparent curved mirror. When the imaging unit 130 uses an opaque reflective imaging element, the display apparatus is a virtual reality (virtual reality, VR) display apparatus. When the imaging unit 130 uses a transparent reflective imaging element, the display apparatus is an augmented reality (augmented reality, AR) display apparatus.

Optionally, the imaging unit 130 may further include a polarization state conversion element, for example, a quarter-wave plate. The polarization state conversion element may be attached to a surface of the reflective imaging element, or the polarization state conversion element may be spaced from the reflective imaging element.

In the embodiment shown in FIG. 4, a light exit surface of the picture generation unit 110 is opposite to the optical path folding unit 120. The image light emitted by the picture generation unit 110 is reflected by the optical path folding unit 120 to the imaging unit 130, then the imaging unit 130 reflects the image light from the optical path folding unit 120 to the optical path folding unit 120, and finally the image light is emitted from the optical path folding unit 120. A quantity of times of reflecting the image light inside the display apparatus is small, which helps improve light efficiency.

In another embodiment, the light exit surface of the picture generation unit 110 is opposite to the imaging unit 130. The image light emitted by the picture generation unit 110 is reflected by the imaging unit 130 to the optical path folding unit 120, then reflected by the optical path folding unit 120 to the imaging unit 130, then reflected by the imaging unit 130 to the optical path folding unit 120 again, and then emitted. In this example, image distortion is small in a display process, and picture quality of the virtual image is good.

It should be noted that, FIG. 4 shows an example in which the picture generation unit 110 is located above the imaging unit 130, and both the picture generation unit 110 and the imaging unit 130 are located on a right side (a side away from the user) of the optical path folding unit 120. In actual application, the picture generation unit 110 may alternatively be disposed below the imaging unit 130.

FIG. 5 is a diagram of a structure of an optical path folding unit 120 according to an embodiment of this application. As shown in FIG. 5, the optical path folding unit 120 includes an optical path folding layer 121, inorganic glass 122, an anti-reflection layer 124, and an organic plate 123 that are sequentially stacked along an emergent optical path (a direction shown by an arrow in FIG. 5) of the imaging unit 130. The anti-reflection layer 124 is configured to reduce reflection of ambient light on an outer surface of the display apparatus. The anti-reflection layer 123 may include at least two polarization state conversion layers. The at least two polarization state conversion layers are used to control a polarization state of ambient light incident to the optical path folding unit, so that reflection of the ambient light can be reduced, and a display area of the display apparatus in a non-operating state is in a dark state, for example, black.

For example, the anti-reflection layer 124 includes a 1/4 wave plate 1241, a first linear polarizer 1242, and a second linear polarizer 1243 that are sequentially stacked along the emergent optical path of the imaging unit 130. There is an included angle between a light transmission axis of the first linear polarizer 1242 and a light transmission axis of the second linear polarizer 1243, and the included angle is greater than 0 degrees and less than 90 degrees. The first linear polarizer 1242 and the 1/4 wave plate 1241 are stacked to form a circular polarizer. In this embodiment of this application, because all of the 1/4 wave plate 1241, the first linear polarizer 1242, and the second linear polarizer 1243 can control a polarization state of received light, the 1/4 wave plate 1241, the first linear polarizer 1242, and the second linear polarizer 1243 may also be referred to as a polarization state conversion layer.

A light component in a first polarization direction (which is the same as a direction of the light transmission axis of the second linear polarizer 1243) in ambient light passes through the second linear polarizer 1243, and then a light component that is in a second polarization direction (which is the same as a direction of the light transmission axis of the first linear polarizer 1242) and that is in the light component in the first polarization direction passes through the first linear polarizer 1242. Because there is an included angle between the light transmission axis of the first linear polarizer 1242 and the light transmission axis of the second linear polarizer 1243, intensity of the light component in the second polarization direction is lower than intensity of the light component in the first polarization direction. After passing through the 1/4 wave plate 1241, the light component in the second polarization direction is converted into left-handed light (or right-handed light). Then, the left-handed light passes through the inorganic glass 122, arrives at the optical path folding layer 121, and is reflected by the optical path folding layer 121 and then converted into right-handed light (or left-handed light). After passing through the 1/4 wave plate 1241, the right-handed light is converted into linearly polarized light in a third polarization direction. The third polarization direction is perpendicular to the second polarization direction, and the linearly polarized light in the third polarization direction cannot pass through the first linear polarizer 1242. Therefore, externally, a display area of the display apparatus is black. Herein, the second linear polarizer 1243 is first used to reduce intensity of ambient light, to further reduce ambient light that enters the display apparatus. In cooperation with the circular polarizer, ambient light reflected back by the display apparatus can be further reduced or even completely eliminated.

Alternatively, in another embodiment, the anti-reflection layer 124 may not include the second linear polarizer 1243, but include only the 1/4 wave plate 1241 and the first linear polarizer 1242.

Due to a property of a material of the organic plate 123, a phase of light changes after the light passes through the organic plate 123. If the organic plate 123 is disposed between any two polarization state conversion layers in the anti-reflection layer 124, for example, disposed between the 1/4 wave plate 1241 and the first linear polarizer 1242, or the organic plate 123 is disposed between the anti-reflection layer 124 and the inorganic glass 122, an anti-reflection effect of the anti-reflection layer 124 is adversely affected. Therefore, in embodiments of this application, the anti-reflection layer 124 is disposed between the organic plate 123 and the inorganic glass 122, to ensure an effect of reducing reflectivity by the anti-reflection layer 124. In addition, the organic plate 123 is located on a side that is of the anti-reflection layer 124 and that is away from the inorganic glass 122, which can protect the anti-reflection layer 124.

Optionally, there is an optical adhesive layer between the inorganic glass 122 and the organic plate 123.

For example, the linear polarizer may include a first triacetyl cellulose (triacetyl cellulose, TAC) layer, a polyvinyl alcohol (polyvinyl alcohol, PVA) layer, a second TAC layer, and a pressure sensitive adhesive (pressure sensitive adhesive, PSA) layer that are sequentially stacked. The first TAC layer and the second TAC layer are used for support and protection, and can prevent the linear polarizer from shrinking. The PVA layer is configured to implement polarization. The PSA layer is configured to attach the linear polarizer to another structure.

Because a surface of the polarizer (namely, a surface on which the PSA layer is located) is sticky, the polarizer may be directly attached to an adjacent layer structure. A non-adhesive surface of the polarizer may be bonded to an adjacent layer structure by using an optical clear adhesive.

For example, in the embodiment shown in FIG. 5, a surface of the second linear polarizer 1243 is bonded to the organic plate 123 by using an optical adhesive layer 126. In another embodiment, a surface of the circular polarizer may alternatively be bonded to the inorganic glass 122 by using an optical adhesive layer.

For example, light transmittance of the optical adhesive layer is 50% to 100%, for example, 50%, 55%, 60%, 65%, 70%, 75%, 80%, 85%, 90%, 95%, or 100%.

When the light transmittance of the optical adhesive layer is low, intensity of ambient light that arrives at the optical path folding layer 121 is reduced, so that intensity of ambient light reflected by the optical path folding layer 121 is reduced accordingly. Therefore, reflection of the ambient light on the optical path folding unit can be reduced, and user experience can be improved. The optical clear adhesive is doped with light-absorbing particles, so that the light transmittance of the optical adhesive layer can be controlled. A type and a doping amount of the light-absorbing particles are not limited in embodiments of this application.

The optical path folding unit further includes an optical film 125. The optical film 125 is located on a side that is of the organic plate 123 and that is away from the inorganic glass 122, and the optical film 125 includes at least one of the following: an AR film and an anti-glare film. The optical film 125 can further reduce reflection of the ambient light on optical folding unit, thereby improving user experience.

Optionally, the display apparatus further includes a housing (not shown in the figure). The housing has an observation window, and the observation window is opposite to eyes of the user, so that the user can view the virtual image. Both the picture generation unit 110 and the imaging unit 130 are located in the housing, the optical path folding unit 120 is located at the observation window, and the organic plate 123 is close to an outer side of the housing relative to the inorganic glass 122. In this way, the housing may protect the units, and the units are integrated together by using the housing, to facilitate overall movement of the display apparatus.

A shape of the housing is not limited in embodiments of this disclosure, and may be a cuboid, a cylinder, or the like. In addition, when the display apparatus is integrated into a large product, for example, integrated into a seat of a transportation means, the seat may be used to provide an accommodation cavity, the picture generation unit 110 and the imaging unit 130 are directly disposed in the accommodation cavity, and the optical path folding unit 120 is disposed at an opening of the accommodation cavity, so that the housing can be omitted.

Optionally, the display apparatus may further include a host processor. The host processor is configured to send image data to the picture generation unit.

Optionally, the display apparatus further includes a power supply that supplies power to the host processor and the picture generation unit.

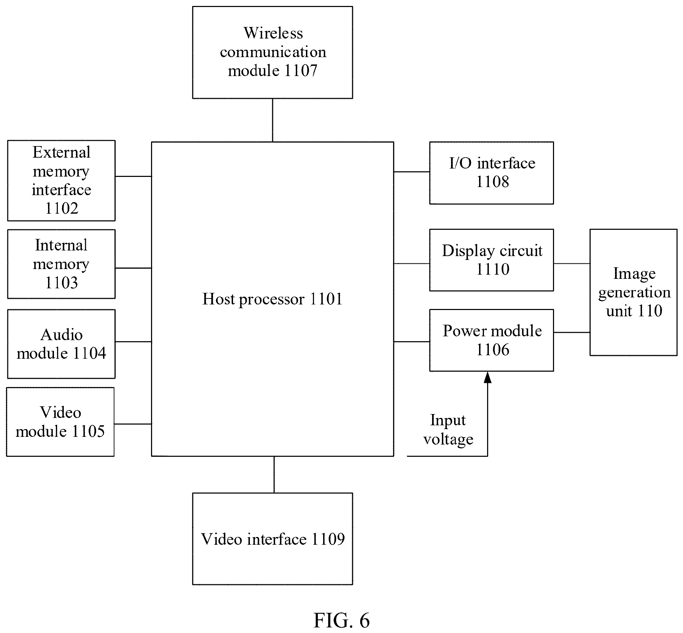

FIG. 6 is a diagram of a circuit of a display apparatus according to an embodiment of this application. As shown in FIG. 6, a circuit in the display apparatus mainly includes a host processor (host CPU) 1101, an external memory interface 1102, an internal memory 1103, an audio module 1104, a video module 1105, a power module 1106, and a wireless communication module 1107, an I/O interface 1108, a video interface 1109, a display circuit 1110, and the like. The host processor 1101 and components around the host processor 1101 such as the external memory interface 1102, the internal memory 1103, the audio module 1104, the video module 1105, the power module 1106, the wireless communication module 1107, the I/O interface 1108, the video interface 1109, and the display circuit 1110 may be connected through a bus. The host processor 1101 may be referred to as a front-end processor.

In addition, the diagram of the circuit in this embodiment of this application does not constitute a specific limitation on the display apparatus. In some other embodiments of this application, the display apparatus may include more or fewer components than components shown in the figure, some components may be combined, some components may be split, or different components may be arranged. The components shown in the figure may be implemented by hardware, software, or a combination of software and hardware.

The host processor 1101 includes one or more processing units. For example, the host processor 1101 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processor (neural-network processing unit, NPU). Different processing units may be independent components, or may be integrated into one or more processors.

A memory may be further disposed in the host processor 1101, and is configured to store computer instructions and data. In some embodiments, the memory in the host processor 1101 is a cache. The memory may store instructions or data just used or cyclically used by the host processor 1101. If the host processor 1101 needs to use the instructions or the data again, the host processor may directly invoke the instructions or the data from the memory. This avoids repeated access, and reduces a waiting time of the host processor 1101, thereby improving system efficiency.

In some embodiments, the display apparatus may further include a plurality of input/output (input/output, I/O) interfaces 1108 connected to the host processor 1101. The I/O interface 1108 may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The I/O interface 1108 may be connected to a device like a mouse, a touchpad, a keyboard, a camera, a speaker/horn, or a microphone, or may be connected to a physical button (for example, a volume button, a brightness adjustment button, or a power-on/off button) on the display apparatus.

The external memory interface 1102 may be configured to connect to an external storage card, for example, a micro SD card, to extend a storage capability of the display apparatus. The external memory card communicates with the host processor 1101 through the external memory interface 1102, to implement a data storage function.

The internal memory 1103 may be configured to store computer-executable program code. The executable program code includes instructions. The internal memory 1103 may include a program storage area and a data storage area. The program storage region may store an operating system, an application required by at least one function (for example, a call function or a time setting function), and the like. The data storage area may store data (such as a phone book and world time) created in a process of using the display apparatus, and the like. In addition, the internal memory 1103 may include a high-speed random-access memory, or may include a nonvolatile memory, for example, at least one magnetic disk storage device, a flash memory component, or a universal flash storage (universal flash storage, UFS). The host processor 1101 runs the instructions stored in the internal memory 1103 and/or the instructions stored in the memory disposed in the host processor 1101, to perform various function applications of the display apparatus and data processing.

The display apparatus may implement an audio function, for example, music playing and making a call, by using the audio module 1104, the application processor, and the like.

The audio module 1104 is configured to convert digital audio information into an analog audio signal for output, and is also configured to convert an analog audio input into a digital audio signal. The audio module 1104 may be further configured to encode and decode audio signals, for example, perform voice playing or voice recording. In some embodiments, the audio module 1104 may be disposed in the host processor 1101, or some functional modules in the audio module 1104 are disposed in the host processor 1101.

The video interface 1109 may receive audio and video signals input externally, and may be specifically a high-definition multimedia interface (high-definition multimedia interface, HDMI), a digital visual interface (digital visual interface, DVI), a video graphics array (video graphics array, VGA), a display port (display port, DP), or the like. The video interface 1109 may alternatively output a video. When the display apparatus is used as a head-up display, the video interface 1109 may receive a speed signal and a power signal that are input by a peripheral device, and may further receive an AR video signal input externally. When the display apparatus is used as a desktop display apparatus, the video interface 1109 may receive a video signal input by an external computer or a terminal device.

The video module 1105 may decode a video input by the video interface 1109, for example, perform H.264 decoding. The video module may further encode a video collected by the display apparatus, for example, perform H.264 encoding on a video collected by an external camera. In addition, the host processor 1101 may also decode a video input by the video interface 1109, and then output an image signal obtained through decoding to the display circuit 1110.

The display circuit 1110 is configured to drive a picture generation unit 110 to display a corresponding image. In this embodiment, the video interface 1109 receives a video source signal input externally, the video module 1105 performs decoding and/or digitization processing and outputs one or more image signals to the display circuit 1110, and the display circuit 1110 drives, based on the input image signal, the picture generation unit 110 to perform imaging, and then outputs imaging light. In addition, the host processor 1101 may also output an image signal to the display circuit 1110. In addition, the display circuit 1110 may also drive, based on an input image signal, the picture generation unit 110 to display an interactive image.

The processor 1101 may control, by executing the computer instructions, the picture generation unit 110 to display an image.

The power module 1106 is configured to supply power to the host processor 1101 and the picture generation unit 110 based on input power (for example, a direct current). The power module 1106 may include a rechargeable battery, and the rechargeable battery may supply power to the host processor 1101 and the picture generation unit 110.

The wireless communication module 1107 may enable the display apparatus to perform wireless communication with the outside, and may provide wireless communication solutions such as a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 1107 may be one or more components integrating at least one communication processor module. The wireless communication module 1107 receives an electromagnetic wave through an antenna, performs frequency modulation and filtering processing on an electromagnetic wave signal, and sends a processed signal to the host processor 1101. The wireless communication module 1107 may further receive a to-be-sent signal from the host processor 1101, perform frequency modulation and amplification on the signal, and convert a processed signal into an electromagnetic wave for radiation through the antenna.

Further, in addition to being input through the video interface 1109, video data decoded by the video module 1105 may be further received in a wireless manner through the wireless communication module 1107 or read from the external memory. For example, the display apparatus may receive the video data from a terminal device or an in-vehicle infotainment system through a wireless local area network in a vehicle, and the display apparatus may further read audio and video data stored in the external memory.

An embodiment of this application further provides a transportation means. The transportation means includes any one of the foregoing display apparatuses.

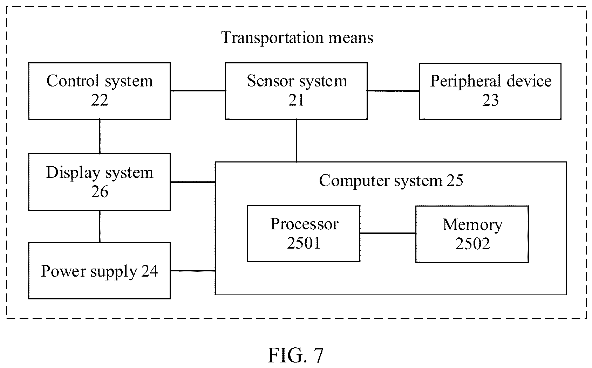

FIG. 7 is a diagram of a function of a transportation means according to an embodiment of this application.

The transportation means may include various subsystems, for example, a sensor system 21, a control system 22, one or more peripheral devices 23 (one is used as an example in the figure), a power supply 24, a computer system 25, and a display system 26 that are shown in the figure, and the foregoing subsystems may communicate with each other. The display system 22 may include the display apparatus provided in embodiments of this application. The transportation means may further include another function system, for example, an engine system that supplies power to the transportation means, and a cockpit. This is not limited herein in this application.

The sensor system 21 may include several detection apparatuses. The detection apparatuses can sense measured information, and convert, according to a specific rule, the sensed information into an electrical signal or information of another required form for output. As shown in FIG. 7, these detection apparatuses may include a global positioning system (Global Positioning System, GPS), a vehicle speed sensor, an inertial measurement unit (Inertial Measurement Unit, IMU), a radar unit, a laser rangefinder, a camera apparatus, a wheel speed sensor, a steering sensor, a gear sensor, another element used for automatic detection, or the like. This is not limited in this application.

The control system 22 may include several elements, for example, a steering unit, a brake unit, a lighting system, a self-driving system, a map navigation system, a network timing system, and an obstacle avoidance system that are shown in the figure. The control system 22 may receive information (such as a vehicle speed and a vehicle distance) sent by the sensor system 21, to implement functions such as autonomous driving and map navigation.

Optionally, the control system 14 may further include elements such as a throttle controller and an engine controller that are configured to control a driving speed of the vehicle. This is not limited in this application.

The peripheral device 23 may include several elements, for example, a communication system, a touchscreen, a user interface, a microphone, and a speaker. The communication system is configured to implement network communication between the transportation means and a device other than the transportation means. During actual application, the communication system may implement network communication between the transportation means and another device by using a wireless communication technology or a wired communication technology. The wired communication technology may mean that the vehicle communicates with another device through a network cable, an optical fiber, or the like.

The power supply 24 represents a system that provides power or energy for the vehicle, and may include but is not limited to a rechargeable lithium battery or a lead-acid battery. During actual application, one or more battery components in the power supply are configured to provide electrical energy or energy for starting the vehicle. A type and a material of the power supply are not limited in this application.

Implementation of several functions of the transportation means may be controlled by the computer system 25. The computer system 25 may include one or more processors 2501 (one processor is shown as an example in the figure) and a memory 2502 (also referred to as a storage apparatus). During actual application, the memory 2502 is also inside the computer system 25, or may be outside the computer system 25, for example, used as a cache in the transportation means. This is not limited in this application.

The processor 2501 may include one or more general-purpose processors, for example, a graphic processing unit (graphic processing unit, GPU). The processor 2501 may be configured to run a related program stored in the memory 2502 or instructions corresponding to a program, to implement a corresponding function of the vehicle.

The memory 2502 may include a volatile memory (volatile memory), for example, a RAM. The memory may alternatively include a non-volatile memory (non-volatile memory), for example, a ROM, a flash memory (flash memory), an HDD, or a solid-state drive (SSD). Alternatively, the memory 2502 may include a combination of the foregoing types of memories. The memory 2502 may be configured to store a set of program code or instructions corresponding to the program code, so that the processor 2501 invokes the program code or the instructions stored in the memory 2502 to implement a corresponding function of the vehicle. In this application, the memory 2502 may store a set of program code used for vehicle control. The processor 2501 may control safe driving of the vehicle by invoking the program code. A manner of implementing safe driving of the vehicle is specifically described in detail below in this application.

Optionally, in addition to storing the program code or the instructions, the memory 2502 may further store information such as a road map, a driving route, and sensor data. The computer system 25 may implement a related function of the vehicle in combination with other elements in the diagram of the function framework of the vehicle, for example, the sensor and the GPS in the sensor system. For example, the computer system 25 may control a driving direction, a driving speed, or the like of the transportation means based on data input of the sensor system 21. This is not limited in this application.

The display system 26 may interact with another system in the transportation means, for example, the display system 26 may display navigation information sent by the control system 22, or play videos sent by the computer system 25 and the peripheral device 23. For a specific structure of the display system 26, refer to the foregoing embodiments of the display apparatus. Details are not described herein again.

In this embodiment, the four subsystems shown in the figure, namely, the sensor system 21, the control system 22, the computer system 25, and the display system 26, are merely examples, and do not constitute a limitation. During actual application, the transportation means may combine several elements in the vehicle based on different functions, to obtain subsystems with corresponding different functions. During actual application, the transportation means may include more or fewer subsystems or elements. This is not limited in this application.

The transportation means in this embodiment of this application may be a known transportation means like a vehicle, an airplane, a ship, or a rocket, or may be a new transportation means that is to emerge in the future. The vehicle may be an electric vehicle, a fuel vehicle, or a hybrid power vehicle, for example, a pure electric vehicle, a range extended electric vehicle, a hybrid electric vehicle, a fuel cell vehicle, or a new energy vehicle. This is not specifically limited in this application.

Unless otherwise defined, a technical term or a scientific term used herein should have a general meaning understood by a person of ordinary skill in the art of this disclosure. The terms "first", "second", "third", and the like used in the specification and claims of this patent application are not intended to indicate any order, quantity, or significance, but are intended to distinguish between different components. Likewise, "a/an", "one", or the like is not intended to indicate a quantity limitation either, but is intended to indicate existing at least one.

The foregoing descriptions are merely an embodiment of this application, but are not intended to limit this application. Any modification, equivalent replacement, or improvement made without departing from the principle of this application shall fall within the protection scope of this application.

## Claims

1. A display apparatus, wherein the display apparatus comprises a picture generation unit, an optical path folding unit, and an imaging unit, wherein
the picture generation unit is configured to emit image light;
the optical path folding unit is configured to direct the image light from the picture generation unit to the imaging unit;
the imaging unit is configured to form a virtual image based on the image light from the optical path folding unit; and
the optical path folding unit comprises an optical path folding layer, inorganic glass, and an organic plate that are sequentially stacked along an emergent optical path of the imaging unit.

2. The display apparatus according to claim 1, wherein the optical path folding unit further comprises an anti-reflection layer, the anti-reflection layer comprises at least two polarization state conversion layers, and the anti-reflection layer is located between the inorganic glass and the organic plate.

3. The display apparatus according to claim 2, wherein the anti-reflection layer comprises a 1/4 wave plate, a first linear polarizer, and a second linear polarizer that are sequentially stacked along the emergent optical path of the imaging unit; or
the anti-reflection layer comprises a 1/4 wave plate and a first linear polarizer that are sequentially stacked along the emergent optical path of the imaging unit.

4. The display apparatus according to any one of claims 1 to 3, wherein the optical path folding layer is a semi-transmissive semi-reflective film; or
the optical path folding layer comprises a 1/4 wave plate and a reflective polarizer that are sequentially stacked along the emergent optical path of the imaging unit; or
the optical path folding layer comprises a 1/4 wave plate, a reflective polarizer, and an absorptive polarizer that are sequentially stacked along the emergent optical path of the imaging unit, and a light transmission axis direction of the reflective polarizer is the same as a light transmission axis direction of the absorptive polarizer.

5. The display apparatus according to any one of claims 1 to 4, wherein light transmittance of the organic plate is 50% to 100%.

6. The display apparatus according to any one of claims 1 to 5, wherein the organic plate comprises at least one of the following: an acrylic plate, a polycarbonate plate, a polyvinyl chloride plate, polystyrene, and allyl diglycol carbonate.

7. The display apparatus according to any one of claims 1 to 6, wherein a thickness of the organic plate is 1 mm to 2 mm.

8. The display apparatus according to any one of claims 1 to 7, wherein there is an optical adhesive layer between the optical path folding layer and the inorganic glass, and/or there is an optical adhesive layer between the inorganic glass and the organic plate.

9. The display apparatus according to claim 8, wherein light transmittance of the optical adhesive layer is 50% to 100%.

10. The display apparatus according to any one of claims 1 to 9, wherein a thickness of the inorganic glass is greater than or equal to 0.2 mm and less than 2 mm.

11. The display apparatus according to any one of claims 1 to 10, wherein the optical path folding unit further comprises an optical film, the optical film is located on a side that is of the organic plate and that is away from the inorganic glass, and the optical film comprises at least one of the following: an anti-reflectance film and an anti-glare film.

12. The display apparatus according to any one of claims 1 to 11, wherein the picture generation unit comprises a direct imaging image source or a projection imaging image source.

13. The display apparatus according to claim 12, wherein the direct imaging image source comprises at least one of the following: a liquid crystal display LCD, an organic light-emitting diode OLED display, or a light-emitting diode LED display.

14. The display apparatus according to claim 12, wherein the projection imaging image source comprises an illumination light source and a spatial light modulator, the illumination light source is configured to generate a light beam, and the spatial light modulator is configured to: modulate and reflect the light beam, to obtain the image light.

15. The display apparatus according to claim 14, wherein the spatial light modulator comprises a liquid crystal on silicon LCoS modulator or a micro-electro-mechanical system MEMS modulator.

16. The display apparatus according to any one of claims 1 to 11, wherein the picture generation unit may further comprise a polarization state conversion element.

17. The display apparatus according to any one of claims 1 to 16, wherein the imaging unit comprises a curved reflector.

18. The display apparatus according to any one of claims 1 to 17, wherein the display apparatus comprises a processor, and the processor is configured to send image data to the picture generation unit.

19. The display apparatus according to any one of claims 1 to 18, wherein the display apparatus comprises a housing, the picture generation unit and the imaging unit are located in the housing, the housing has an observation window, and the optical path folding unit is located at the observation window.

20. A transportation means, comprising the display apparatus according to any one of claims 1 to 19, wherein the display apparatus is mounted on the transportation means.
